# EUROPÄISCHE PATENTSCHRIFT

(11) **EP 1 654 085 B1**
(45) Veröffentlichungstag und Bekanntmachung des Hinweises auf die Patenterteilung: **15.10.2008**
(21) Anmeldenummer: 04764161.8
(22) Anmeldetag: 16.08.2004
(51) Int. Cl.: B23C 5/00, B23C 5/10, B23C 5/08

(54) **FRÄSWERKZEUG**
MILLING TOOL
OUTIL A FRAISER

(30) Priorität: 15.08.2003 DE 10338276
(43) Veröffentlichungstag der Anmeldung: 10.05.2006
(73) Patentinhaber: Nubius Group Präzisionswerkzeuge GmbH, 73037 Göppingen (DE)
(72) Erfinder: FREY, Oskar, 73107 Eschenbach (DE)
(74) Vertreter: Bulling, Alexander
(86) Internationale Anmeldenummer: PCT/EP2004/009169
(87) Internationale Veröffentlichungsnummer: WO 2005/016583

(56) Entgegenhaltungen:
- EP-A- 0 458 434
- WO-A-01/85373
- DE-A- 10 053 343
- GB-A- 452 750

## Beschreibung

Die Erfindung betrifft ein Fräswerkzeug mit einem Grundkörper, auf dem an der Stirnseite und/oder Umfangsseite mindestens eine Materialerhebung vorgesehen ist, auf und/oder an deren Vorderseite mindestens eine Schneide vorgesehen ist, wobei benachbart zu der Schneide oder zwischen den Schneiden mindestens eine Spankammer zum Abtransport von während eines Fräsvorgangs erzeugten Spänen vorgesehen ist, die mindestens einen Oberflächenabschnitt aufweist, der sich von einer oder benachbart zu einer Schneide bis hin zur Rückseite einer zu der Schneide benachbarten Materialerhebung erstreckt.Die Erfindung betrifft außerdem ein Fräswerkzeug mit mindestens einer an der Stirnseite und/oder Umfangsseite des Fräswerkzeugs angeordneten Schneide, wobei benachbart zu der Schneide oder zwischen den Schneiden mindestens eine Spankammer zum Abtransport von während eines Fräsvorgangs erzeugten Spänen vorgesehen ist.

Die Geometrien der Spankammern von aus dem Stand der Technik bekannten Fräswerkzeugen sind auf eine möglichst einfache Herstellbarkeit hin optimiert. So können die bekannten Spankammern hergestellt werden, indem Kugel- oder Scheibenfräser in das Vollmaterial des herzustellenden Fräswerkzeugs eindringen und das Material spanabhebend entfernen. Die auf diese weise entstehenden Spankammern sind durch schroffe Geometriewechsel zwischen benachbarten Oberflächenabschnitten und durch einen verhältnismäßig großen Anteil von planen, ebenen, das heißt ungekrümmten Oberflächenabschnitten geprägt.

Aus der EP 0 458 434 A2 ist ein Fräswerkzeug mit einer spiralförmigen Spankammer bekannt geworden. Aus der EP 0 479 090 A1 ist ein Fräswerkzeug mit einer sphärischen Spankammer bekannt geworden.

Nachteilig bei den Fräswerkzeugen mit bekannten Spankammern ist, dass der Abtransport der bei einem Fräsvorgang erzeugten Späne nicht optimal ist und die Späne an einzelnen Oberflächenabschnitten der Spankammern hängen bleiben können. Dies hat einen negativen Einfluss auf die Qualität der durch das Fräswerkzeug erzeugten Oberfläche eines Werkstücks sowie auf die Schneidleistung und die thermische Belastung des Fräswerkzeugs. Bei mangelhaftem Abtransport der Späne kann es vorkommen, dass diese zwischen das Fräswerkzeug und das zu bearbeitende Werkstück gelangen und das Fräswerkzeug im oder am Werkstück blockieren. Hierdurch können das Fräswerkzeug und/oder das Werkstück beschädigt werden.

Hiervon ausgehend liegt der Erfindung die Aufgabe zugrunde, Fräswerkzeuge zu schaffen, mit denen der Abtransport von während eines Fräsvorgangs erzeugten Spänen optimiert wird.

Diese Aufgabe wird erfindungsgemäß mit einem Fräswerkzeuge mit den Merkmalen des Anspruchs 1 oder Anspruchs 2 gelöst.

Durch den mehrfach gekrümmten Oberflächenabschnitt wird eine Transportunterlage für Späne geschaffen, die entlang des mehrfach gekrümmten Oberflächenabschnitts leicht abfließen können, ohne dabei blockiert zu werden und/oder sich in der Spankammer anhäufen zu können. Durch den effektiven Abtransport der Späne wird die Qualität der mit dem erfindungsgemäßen Fräswerkzeug bearbeiteten Oberflächen verbessert, die thermische Belastung des Fräswerkzeugs verringert, sowie die Schneidleistung und die Lebensdauer des Fräswerkzeugs erhöht.

Dadurch, dass die Spankammer im Wesentlichen durch einen in sich mehrfach gekrümmten Oberflächenabschnitt gebildet ist, können plane, das heißt ungekrümmte Oberflächenabschnitte weitestgehend vermieden werden, so dass Späne weitestgehend auf dem mehrfach gekrümmten Oberflächenabschnitt abtransportiert werden können. Zwar sind solche in sich mehrfach gekrümmten Oberflächenabschnitte auch an sich bekannten Fräswerkzeugen vorhanden, deren Spankammern mit Hilfe von Kugelfräsern hergestellt worden sind. Jedoch nehmen dort gegebenenfalls vorhandene Kugeloberflächenabschnitte nur einen sehr geringen Teil der Oberfläche der Spankammer ein. Dieser geringe Oberflächenanteil kann für den Abtransport der Späne keine unterstützende Wirkung entwickeln. Hingegen ist bei der erfindungsgemäßen Spankammer diese nicht nur in minimalen Abschnitten sondern weitestgehend als mehrfach gekrümmter oberflächenabschnitt ausgebildet, der es ermöglicht, die während des Fräsvorgangs erzeugten Späne blockierfrei abzutransportieren.

Erfindungsgemäß weist der Oberflächenabschnitt Stufen auf. Dies bedeutet, dass der Oberflächenabschnitt durch einzelne Abschnitte gebildet ist, die jeweils aneinander angrenzen, um insgesamt den mehrfach gekrümmten Oberflächenabschnitt oder den rinnenförmigen Oberflächenabschnitt und/oder die mehrfach gekrümmte Ebene zu bilden. Eine solche stufenartige Oberflächenstruktur des Oberflächenabschnitts hat den Vorteil, dass beim Fräsvorgang erzeugte Späne entlang der Stufen des Oberflächenabschnitts aus der Spankammer abtransportiert werden können und dabei nach Abtransport von einer ersten Stufe und Aufprall auf eine zweite Stufe durch den geringfügigen Geometriewechsel zwischen der ersten und der zweiten Stufe einen Bewegungsimpuls erhalten. Dieser Impuls unterstützt den Abtransport des Spans in Richtung auf eine gegebenenfalls vorhandene dritte oder weitere Stufen oder schließlich in die Umgebung des Fräswerkzeugs.

Die Stufen sind parallel zueinander angeordnet, wodurch ein wirksamer Spanabtransport entlang der gesamten Breite einer Stufe gewährleistet ist.

Die Stufen können in sich einfach oder mehrfach gekrümmt sein. Durch die Krümmung der Stufen wird erreicht, dass die Stufen ohne schroffe Geometriewechsel ineinander übergehen und/oder aneinander angrenzen können.

Es ist möglich, dass die Spankammer durch einen in sich mehrfach gekrümmten Oberflächenabschnitt gebildet ist, der an einen einfach gekrümmten Oberflächenabschnitt angrenzt, wobei der mehrfach gekrümmte Oberflächenabschnitt und der einfach gekrümmte Oberflächenabschnitt gemeinsam die Spankammer bilden. Auch durch diese Geometrie ist gewährleistet, dass ein weitestgehend blockierfreier Abfluss der Späne erfolgen kann.

Durch Ausbildung der Spankammer als rinnenförmigen Oberflächenabschnitt wird eine Spankammergeametrie geschaffen, die den wirksamen Abtransport der Späne unterstützt. Durch die Anordnung des Rillengrunds schräg oder windschief schräg zur Rotationsachse des Fräswerkzeugs müssen die Späne nicht, wie aus dem Stand der Technik bekannt, in genau radialer oder genau axialer Richtung im Verhältnis zur Rotationsachse des Fräswerkzeugs entfernt werden. Vielmehr können die Späne in Richtungen mit Bewegungskomponenten sowohl parallel als auch senkrecht zur Rotationsachse des Fräswerkzeugs entfernt werden. Bei windschief schräger Anordnung des Rinnengrunds im Verhältnis zur Rotationsachse des Fräswerkzeugs können abzutransportierende Späne in der rinnenförmig ausgebildeten Spankammer mitrotieren und dabei schraubenlinienförmig vom Werkstück abtransportiert werden.

Der Rinnengrund kann entlang einer geraden oder stetig gekrümmten Grundlinie verlaufen. Dies bedeutet, dass die Rinne bei einer geraden Grundlinie als Teilstück eines Zylindermantels ausgebildet sein kann und bei einer stetig gekrümmten Grundlinie als in sich mehrfach gekrümmte Oberfläche. Eine stetig gekrümmte Grundlinie erlaubt es, die Rinnengeometrie optimal an die durch die Anordnung der Schneiden vorgegebenen Geometriebedingungen anpassen zu können.

Vorteilhafterweise verläuft der Rinnengrund entlang einer spiralförmigen Grundlinie, wobei entlang der Grundlinie der radiale Abstand zur Rotationsachse des Fräswerkzeugs variieren kann. Mit dieser Maßnahme kann erreicht werden, dass Späne sich spiralförmig von der Rotationsachse des Fräswerkzeugs entfernen können und gleichzeitig von der Oberfläche des zu bearbeitenden Werkstücks abgehoben werden können. Dies trägt zu einem blockierfreien und störungsfreien Abtransport der Späne bei.

Dadurch, dass der Oberflächenabschnitt eine stete, in sich mehrfach gekrümmte Ebene bildet und dass der Oberflächenabschnitt sich von einer oder benachbart zu einer Schneide bis hin zur Rückseite einer zu der Schneide benachbarten Materialerhebung erstreckt und keine Unstetigkeitsstellen aufweist, sondern vielmehr als mehrfach gekrümmte Ebene ausgebildet ist, ist ein besonders effizienter Spanabtransport möglich.

Im Gegensatz zu aus dem Stand der Technik bekannten Spankammern sind keine schroffen Geometriewechsel zwischen einzelnen Oberflächenabschnitten, die gemeinsam Spankammern bilden, vorgesehen. Die stete Ebene kann aus mehreren Teilabschnitten gebildet sein, jedoch ist erfindungswesentlich, dass die Teilabschnitte ohne schroffen Geometriewechsel aneinandergrenzen und/oder ineinander übergehen. Auf diese Weise werden die aus dem Stand der Technik bekannten Knicke zwischen einzelnen Oberflächenabschnitten der Spankammern vermieden, so dass ein effizienter Spanabtransport stattfinden kann.

Die Oberflächenabschnitte der Spankammer könne mit Hilfe eines rotierenden Bearbeitungswerkzeugs durch spanenden und/oder schleifenden Materialabtrag hergestellt sein, wobei zur Herstellung eines Oberflächenabschnitts der Spankammer die Rotationsachse des Bearbeitungswerkzeugs schräg oder windschief schräg zur Rotationsachse des Fräswerkzeugs angeordnet wird.

Während die Spankammern der aus dem Stand der Technik bekannten Fräswerkzeuge hergestellt werden, indem die Rotationsachse des herzustellenden Fräswerkzeugs und die Rotationsachse des Bearbeitungswerkzeugs senkrecht schneidend oder senkrecht windschief zueinander angeordnet sind, kann die Herstellung der Spankammern der erfindungsgemäßen Fräswerkzeuge mit schräg oder windschief schräg zueinander angeordneten Rotationsachsen erfolgen. Auf diese Weise können neue Geometrien, die den Spanabfluss unterstützen, hergestellt werden. Diese neuen Geometrien können in sich mehrfach gekrümmte Oberflächenabschnitte, rinnenförmige Oberflächenabschnitte und/oder sich mehrfach gekrümmte Ebenen aufweisen. Diese Geometrien sind dazu geeignet, den Spanabtransport gegenüber Fräswerkzeugen mit bekannten Spankammergeometrien zu verbessern.

Für alle bisher genannten erfindungsgemäßen Fräswerkzeuge ist es vorteilhaft, dass der Oberflächenabschnitt mindestens 40% der Oberfläche der Spankammer einnimmt. Während bei den aus dem Stand der Technik bekannten mehrfach gekrümmten Oberflächenabschnitten maximal 5% der Oberfläche der Spankammer von einem solchen Oberflächenabschnitt eingenommen sind, können es bei der erfindungsgemäßen Spankammern mindestens 40% sein, so dass eine wirksame Unterstützung des Abtransports der Späne erreicht wird.

Vorteilhafterweise nimmt der Oberflächenabschnitt oder nehmen die Oberflächenabschnitte mindestens 50% der Oberfläche der Spankammer ein, wodurch der Abtransport der Späne noch besser unterstützt werden kann. Mit jeweils vorteilhafter Wirkung für noch besseren Abtransport der Späne nehmen der Oberflächenabschnitt oder die Oberflächenabschnitte mindestens 60%, 70%, 80%, 90% oder sogar die gesamte Oberfläche der Spankammer ein.

Der Oberflächenabschnitt ist vorteilhafterweise zumindest abschnittsweise durch eine gekrümmte Randlinie begrenzt. Durch die gekrümmten Randlinien wird gegenüber einer geradlinigen Randlinie die Berandung der Spankammer vergrößert. Somit können die Späne leichter abfließen, da ein vergleichsweise großer Spanabflussbereich erzeugt wird und die Späne nicht, wie beim Stand der Technik, nur in einem vergleichsweise engen und geradlinig begrenzten Randbereich aus der Spankammer in die Umgebung des Fräswerkzeugs abfließen können.

Besonders vorteilhaft ist es, wenn die Randlinie mehrfach gekrümmt ist. Hierdurch wird der Randbereich, in dem der Abtransport der Späne aus der Spankammer in die Umgebung des Fräswerkzeugs stattfindet, weiter vergrößert, so dass eine noch bessere Abtransportwirkung erzeugbar ist.

In vorteilhafter Weise ist die Randlinie mindestens entlang 40% ihres Verlaufs gekrümmt.

Noch vorteilhafter ist es, wenn die Randlinie entlang 50%, 60%, 70%, 80%, 90% oder entlang ihres gesamten Verlaufs gekrümmt ist. Hierdurch wird der Bereich, in dem der Abtransport der Späne aus der Spankammer in die Umgebung des Fräswerkzeugs stattfinden kann, nochmalig vergrößert, wodurch eine besonders große Sicherheit gegen ein Blockieren des Fräswerkzeugs in einem Werkstück aufgrund eingeklemmter Späne erzeugt wird.

Die Stufen können senkrecht und/oder schräg zur Rotationsachse des Fräswerkzeugs angeordnet sein. Durch diese Anordnung der Stufen kann der Abtransport der Späne in Richtungen bewirkt werden, die von der zu bearbeitenden Werkstückoberfläche weggerichtet sind.

Verschiedene Stufen können mit verschiedenen Bearbeitungswerkzeugen und/oder mit unterschiedlich orientierten Rotationsachsen des Bearbeitungswerkzeugs und/oder der Bearbeitungswerkzeuge hergestellt sein. Diese Bearbeitungswerkzeuge können beispielsweise als Scheibenfräser ausgebildet sein, deren Rotationsachse schräg oder windschief schräg zur Rotationsachse des Fräswerkzeugs angeordnet wird, so dass erfindungsgemäße Stufen erzeugt werden können.

Weitere vorteilhafte Ausgestaltungen und Einzelheiten der Erfindung sind der folgenden Beschreibung zu entnehmen, in der die Erfindung anhand der in der Zeichnung dargestellten Ausführungsbeispiele näher beschrieben und erläutert ist.

In der Zeichnung zeigen:
- Figur 1: ein aus dem Stand der Technik bekanntes Fräswerkzeug mit Spankammern, die jeweils eine plane, ungekrümmte Ebene aufweisen;
- Figur 2: ein aus dem Stand der Technik bekanntes Fräswerkzeug mit einer Spankammer, die mit Hilfe eines Kugelfräsers hergestellt ist;
- Figur 3: ein erfindungsgemäßes Fräswerkzeug, dessen Spankammern durch einen in sich mehrfach gekrümmten Oberflächenabschnitt gebildet sind;
- Figur 4: ein erfindungsgemäßes Fräswerkzeug, dessen Spankammern durch einen in sich mehrfach gekrümmten Oberflächenabschnitt und einen einfach gekrümmten Oberflächenabschnitt gebildet sind;
- Figur 5: ein erfindungsgemäßes Fräswerkzeug, dessen Spankammern durch einen insgesamt rinnenförmigen Oberflächenabschnitt gebildet sind;
- Figur 6: ein erfindungsgemäßes Fräswerkzeug, dessen Span durch eine stete, in sich mehrfach gekrümmte Ebene gebildet ist;
- Figur 7: ein erfindungsgemäßes Fräswerkzeug, dessen Spankammer dadurch hergestellt ist, dass die Rotationsachse des Bearbeitungswerkzeugs schräg oder windschief schräg zur Rotationsachse des Fräswerkzeugs angeordnet wurde;
- Figur 8: ein dem in Figur 7 dargestellten Fräswerkzeug ähnliches Fräswerkzeug mit feiner gestufter Spankammer;
- Figur 9: ein erfindungsgemäßes Fräswerkzeug, dessen Spankammern wendelförmig ausgebildet sind.

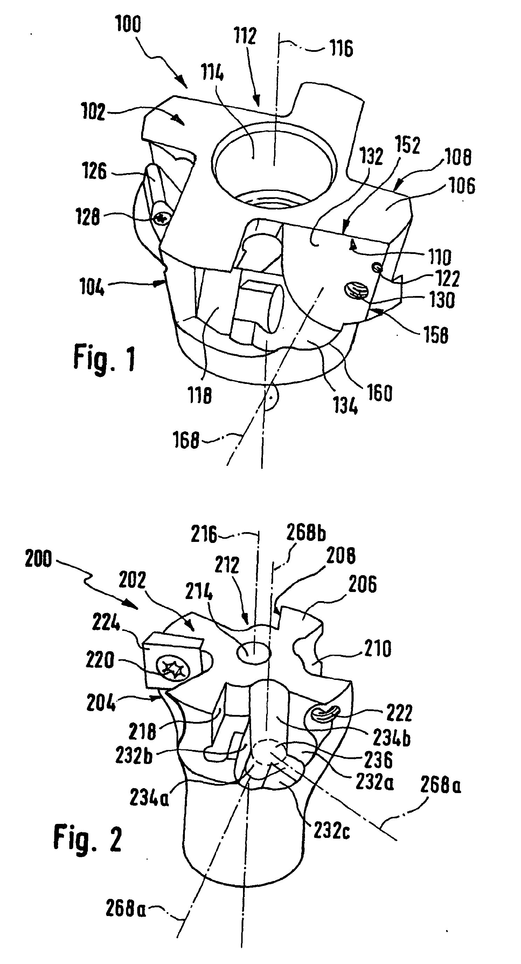

In Figur 1 ist ein aus dem Stand der Technik bekanntes Fräswerkzeug allgemein mit dem Bezugszeichen 100 bezeichnet Das Fräswerkzeug 100 weist eine Stirnseite 102 sowie eine Umfangsseite 104 auf. An dem Fräswerkzeug 100 sind insgesamt vier Materialerhebungen 106 vorgesehen, die jeweils eine Vorderseite 108 und eine Rückseite 110 aufweisen. Zwischen der Vorderseite 108 einer Materialerhebung 106 und der Rückseite 110 einer benachbarten Materialerhebung 106 ist jeweils eine Spankammern 112 ausgebildet. Das Fräswerkzeug 100 weist insgesamt vier Spankammern 112 auf.

Das Fräswerkzeug 100 kann mittels einer zentrisch angeordneten Werkzeugaufnahme 114 mit einer (nicht dargestellten) Werkzeugmaschine verbunden werden, um das Fräswerkzeugs 100 um dessen Rotationsachse 116 rotieren zu lassen.

Im Bereich der Vorderseite 108 einer Materialerhebung 106 sind Scheidenaufnahmen 118 vorgesehen, in denen (in Figur 1 nicht dargestellte) Schneiden aufnehmbar sind. Hierzu sind im rückwärtigen Bereich der Schneidenaufnahme 118 Schneidenbefestigungsgewinde 122 vorgesehen, in die eine (nicht dargestellte) Schneidenbefestigungsschraube eingreifen kann.

Das in Figur 1 dargestellte Fräswerkzeug weist Halteplatten 126 auf, die mittels einer Halteplattenbefestigungsschraube 128 in einem Halteplattenbefestigungsgewinde 130, die in der Materialerhebung 106 vorgesehen ist, befestigt ist. Die Halteplatte 126 dient zur Fixierung der (nicht dargestellten) Schneiden, die in den Schneidenaufnahmen 118 aufgenommen sind.

Die Spankammern 112 sind im Wesentlichen begrenzt durch einen ungekrümmten Oberflächenabschnitt 132, der an der Rückseite 110 einer Materialerhebung 106 vorgesehen ist. Dieser ungekrümmte Oberflächenabschnitt 132 grenzt an einen einfach gekrümmten Oberflächenabschnitt 134. Der ungekrümmte Oberflächenabschnitt 132 und der einfach gekrümmte Oberflächenabschnitt 134 begrenzen zusammen mit der (nicht dargestellten) Schneide jeweils eine Spankammer 112.

Die Spankammer 112 ist begrenzt durch einen an der Stirnseite 102 vorgesehenen geraden Randlinienabschnitt 152 und einen umfangsseitig vorgesehenen geraden Randlinienabschnitt 158, wobei die Abschnitte 152 und 158 den ungekrümmten Oberflächenabschnitt 132 gegenüber der Stirnseite 102 und der Umfangsseite 104 des Fräswerkzeugs 100 begrenzen. Die Spankammer 112 ist weiterhin begrenzt durch einen einfach gekrümmten Randlinienabschnitt 160, der den einfach gekrümmten Oberflächenabschnitt 134 der Spankammer 112 umfangsseitig begrenzt.

Die Spankammer 112 ist hergestellt, indem ein (nicht dargestelltes) Bearbeitungswerkzeug um eine Bearbeitungsachse 168 rotiert, wobei die Bearbeitungsachse 168 senkrecht zur Rotationsachse 116 des Fräswerkzeugs 100 angeordnet ist. Die auf diese Weise gebildete Spankammer 112 weist einen schroffen Geometriewechsel zwischen dem ungekrümmten Oberflächenabschnitt 132 und dem einfach gekrümmten Oberflächenabschnitt 134 auf. Durch diesen schroffen Geometriewechsel ist der Abtransport von während eines Fräsvorgangs mit dem Fräswerkzeug 100 erzeugten Spänen behindert, wodurch schlimmstenfalls das Fräswerkzeug 100 in einem (nicht dargestellten) zu bearbeitenden Werkstück blockiert werden kann.

In Figur 2 ist ein ebenfalls aus dem Stand der Technik bekanntes Fräswerkzeug insgesamt mit dem Bezugszeichen 200 bezeichnet. Auch dieses Fräswerkzeug 200 weist eine Stirnseite 202 sowie eine Umfangsseite 204 auf. Es sind insgesamt vier Materialerhebungen 206 vorgesehen, die jeweils eine Vorderseite 208 und eine Rückseite 210 aufweisen. Die Vorderseite 208 einer Materialerhebung 206 und die Rückseite 210 einer benachbarten Materialerhebung 206 begrenzen jeweils eine Spankammer 212.

Das Fräswerkzeug 200 kann mit Hilfe einer zentrisch angeordneten Werkzeugaufnahme 214 an einer (nicht dargestellten) Werkzeugmaschine befestigt werden, um das Fräswerkzeug 200 anzutreiben und um die Rotationsachse 216 rotieren zu lassen.

An den Materialerhebungen 206 sind jeweils Schneidenaufnahmen 218 vorgesehen. In diesen Schneidenaufnahmen 218 können Schneiden 224 mit Hilfe von in Schneidenbefestigungsgewinde 222 eingreifenden Schneidenbefestigungsschrauben 220 befestigt werden.

Die Spankammer 212 weist drei ungekrümmte Oberflächenabschnitte 232a, 232b und 232c auf. Der ungekrümmte Oberflächenabschnitte 232a ist an der Rückseite 210 einer Materialerhebung 206 vorgesehen und der ungekrümmte Oberflächenabschnitte 232b an der Vorderseite 208 einer Materialerhebung 206. Der ungekrümmte Oberflächenabschnitte 232c erstreckt sich in einer Ebene senkrecht zur Rotationsachse 216. Der letztgenannte ungekrümmte Oberflächenabschnitt 232c grenzt beidseitig an einfach gekrümmte Oberflächenabschnitte 234a, die als Teilfläche eines Zylindermantels ausgebildet sind.

Die Spankammer 212 ist weiterhin gebildet durch einen einfach gekrümmten Oberflächenabschnitt 234b, der ebenfalls als Ausschnitt eines Zylindermantels ausgebildet ist und senkrecht zur Rotationsachse 216 verläuft. Die einfach gekrümmten Oberflächenabschnitte 234a und 234b gehen in einem mehrfach gekrümmten Oberflächenabschnitt 236 ineinander über. Somit weist die Spankammer 212 einen mehrfach gekrümmten Oberflächenabschnitt 236 auf, der nur einen sehr geringen Anteil der Oberfläche der Spankammer 212 einnimmt. Die Spankammer 212 ist also nicht im Wesentlichen sondern nur zu einem sehr geringen Anteil durch den mehrfach gekrümmten Oberflächenabschnitt 236 gebildet.
Der mehrfach gekrümmte Oberflächenabschnitt 236 entsteht dadurch, dass ein Kugelfräser entlang der Bearbeitungsachsen 268a (senkrecht zur Rotationsachse 216 angeordnet) beziehungsweise entlang der Bearbeitungsachse 268b (parallel zur Rotationsachse 216 angeordnet) verfahren wird.

Die Spankammer 212 weist, bedingt durch die engen Radien der einfach gekrümmten Oberflächenabschnitte 234a und 234b und bedingt durch die ungekrümmten Oberflächenabschnitte 232 einen für einen Spanabtransport ungünstige Geometrie auf. Der mehrfach gekrümmte Oberflächenabschnitt 236 ist ebenfalls nicht dazu geeignet, den Abtransport von Spänen zu unterstützen.

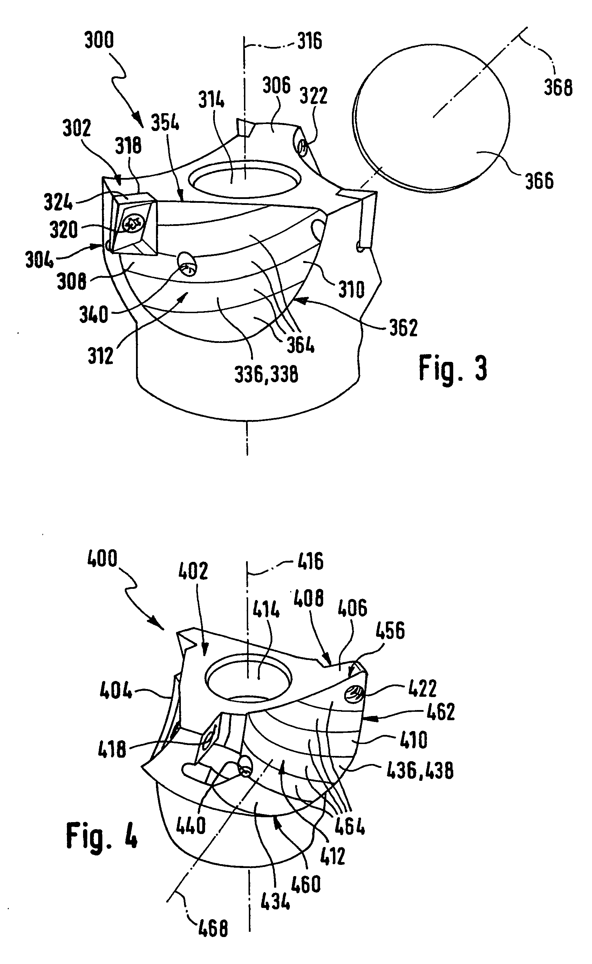

In Figur 3 ist ein erfindungsgemäßes Fräswerkzeug insgesamt mit dem Bezugszeichen 300 bezeichnet. Das Fräswerkzeug 300 weist eine Stirnseite 302 sowie eine Umfangsseite 304 auf. Es sind insgesamt drei Materialerhebungen 306 vorgesehen, die jeweils eine Vorderseite 308 und eine Rückseite 310 aufweisen, wobei Spankammern 312 jeweils zwischen benachbarten Materialerhebungen 306 ausgebildet sind.

Das Fräswerkzeug 300 kann mit Hilfe einer zentrisch angeordneten Werkzeugaufnahme 314 mit einer nicht dargestellten Werkzeugmaschine verbunden werden, so dass das Fräswerkzeug 300 um seine Rotationsachse 316 rotieren kann.

An jeder Vorderseite 308 der Materialerhebungen 306 sind Schneidenaufnahmen 318 vorgesehen, in denen mit Hilfe einer Schneidenbefestigungsschraube 320, die in ein Schneidenbefestigungsgewinde 322 eingreift, Schneiden 324 fixiert sind.

Die Spankammer 312 ist insgesamt als mehrfach gekrümmter Oberflächenabschnitt 336 ausgebildet. Dieser Oberflächenabschnitt 336 bildet eine stete, in sich mehrfach gekrümmte Ebene 338. Im Gegensatz zu den aus dem Stand der Technik bekannten Spankammern 112, 212 weist die Spankammer 312 keinen schroffen Geometriewechsel, insbesondere keine größeren ungekrümmten Oberflächenabschnitte, auf. Vielmehr ist die Spankammer 312 derart ausgebildet, dass ein Spanabfluss, bedingt durch den mehrfach gekrümmten Oberflächenabschnitt 336, ohne schroffe Geometriewechsel besonders effizient und weitestgehend blockierfrei erfolgen kann.

In dem mehrfach gekrümmten Oberflächenabschnitt 336 ist der Austritt eines Kühlkanals 340 vorgesehen, durch den einer benachbarten Schneide 324 während des Fräsvorgangs Kühlflüssigkeit zugeführt werden kann.

Der mehrfach gekrümmte Oberflächenabschnitt 336 ist stirnseitig von einem einfach gekrümmten Randlinienabschnitt 354 und umfangsseitig von einem mehrfach gekrümmten Randlinienabschnitt 362 begrenzt. Durch die Krümmung der Randlinienabschnitte 354 und 362 wird der Weg, den ein abzutransportierender Span zurücklegen muss, bevor er die Spankammer 312 verlässt, gegenüber Spankammern mit geraden Randlinienabschnitten verkürzt. Dies trägt zu einem schnellen und problemlosen Abtransport der Späne bei.

Der mehrfach gekrümmte Oberflächenabschnitt 336 weist einzelne, als Stufen 364 ausgebildete Segmente auf. Die einzelnen Stufen 364 werden hergestellt, indem ein schematisch dargestelltes Bearbeitungswerkzeug 366 um eine Rotationsachse 368 rotiert und dabei in das Vollmaterial des herzustellenden Fräswerkzeugs 300 eindringt. Die Rotationsachse 368 des Bearbeitungswerkzeugs 366 ist windschief schräg zur Rotationsachse 316 des Fräswerkzeugs 300 angeordnet. Durch diese Anordnung der Rotationsachsen 316 und 368 entsteht ein für die erfindungsgemäßen Fräswerkzeuge charakteristisches Stufenprofil.

In Figur 4 ist ein weiteres erfindungsgemäßes Fräswerkzeug insgesamt mit dem Bezugszeichen 400 bezeichnet. Da das Fräswerkzeug 400 in seinen wesentlichen Bestandteilen dem mit Bezug auf Figur 3 beschriebenen Fräswerkzeug 300 entspricht, wird im Folgenden lediglich auf die Besonderheiten des Fräswerkzeugs 400 eingegangen.

Das Fräswerkzeug 400 weist angrenzend an seine Umfangsseite 404 einen einfach gekrümmten Oberflächenabschnitt 434 auf, der sich benachbart zur Schneidenaufnahme 418 hin erstreckt. An diesen einfach gekrümmten Oberflächenabschnitt 434 schließt sich ein mehrfach gekrümmter Oberflächenabschnitt 436 an, der eine stete, in sich mehrfach gekrümmte Ebene 438 bildet und stirnseitig durch einen mehrfach gekrümmten Randlinienabschnitt 456 begrenzt ist. Der mehrfach gekrümmte Oberflächenabschnitt 436 ist umfangsseitig durch einen mehrfach gekrümmten Randlinienabschnitt 462 begrenzt. An den Randlinienabschnitt 462 schließt sich, den einfach gekrümmten Oberflächenabschnitt 434 begrenzend, ein einfach gekrümmter Randlinienabschnitt 460 an.

Der mehrfach gekrümmte Oberflächenabschnitt 436 ist, ähnlich zum mehrfach gekrümmten Oberflächenabschnitt 336 des Fräswerkzeugs 300 (siehe Figur 3), mit Stufen 464 versehen. Die Stufen 464 bewirken, dass ein abzutransportierender Span entlang seines Weges über den Oberflächenabschnitt 436 mehrfach Beschleunigungsimpulse erhält, wodurch ein schneller und blockierfreier Abtransport der Späne unterstützt wird.

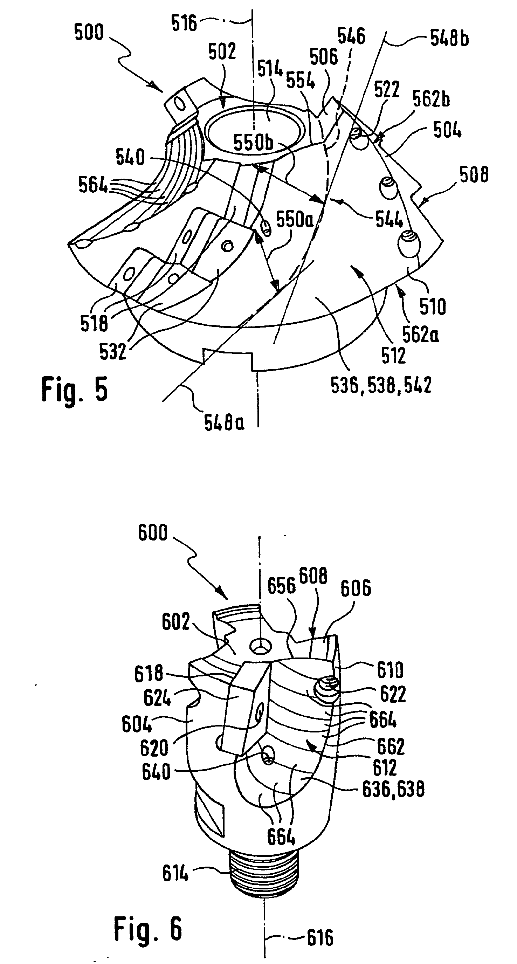

Das in Figur 5 dargestellte Fräswerkzeug 500 weist drei Materialerhebungen 506 auf, an deren Vorderseite 508 jeweils drei Schneidenaufnahmen 518 zur Aufnahme von nicht dargestellten Schneiden vorgesehen sind. Benachbart zu den Schneidenaufnahmen 518 sind jeweils ungekrümmte Oberflächenabschnitte 532 vorgesehen, die einen nur sehr kleinen Teil der zwischen den Materialerhebungen 506 angeordneten Spankammern 512 einnehmen.

Die Spankammern 512 sind im Wesentlichen durch einen mehrfach gekrümmten Oberflächenabschnitt 536 gebildet, der eine stete, in sich mehrfach gekrümmte Ebene 538 beschreibt.

Der mehrfach gekrümmte Oberflächenabschnitt 536 bildet insgesamt eine Rinne 542, deren Rinnengrund 544 entlang einer Grundlinie 546 verläuft. Die Grundlinie 546 verläuft mit Bezug auf die Rotationsachse 516 des Fräswerkzeugs 500 schraubenlinienförmig. Dabei verlaufen zur Grundlinie 546 anlegbare Tangenten (zum Beispiel 548a, 548b) windschief schräg zur Rotationsachse 516. Dabei ist der radiale Abstand 550a zwischen der Tangente 548a und der Rotationsachse 516 größer als der radiale Abstand 550b zwischen der Tangente 548b und der Rotationsachse 516.

Der mehrfach gekrümmte Oberflächenabschnitt 536 ist stirnseitig durch einen einfach gekrümmten Randlinienabschnitt 554 und umfangsseitig durch mehrfach gekrümmte Randlinienabschnitte 562a und 562b begrenzt.

Auch der mehrfach gekrümmte Oberflächenabschnitt 536 weist Stufen 564 auf, die durch stufenweise Bearbeitung mit einem nicht dargestellten Bearbeitungswerkzeug erzeugt werden.

Figur 6 zeigt ein weiteres Beispiel eines erfindungsgemäßen Fräswerkzeugs 600. Dessen Spankammern 612 sind durch einen in sich mehrfach gekrümmten Oberflächenabschnitt 636 gebildet, der kehlenartig ausgebildet ist.

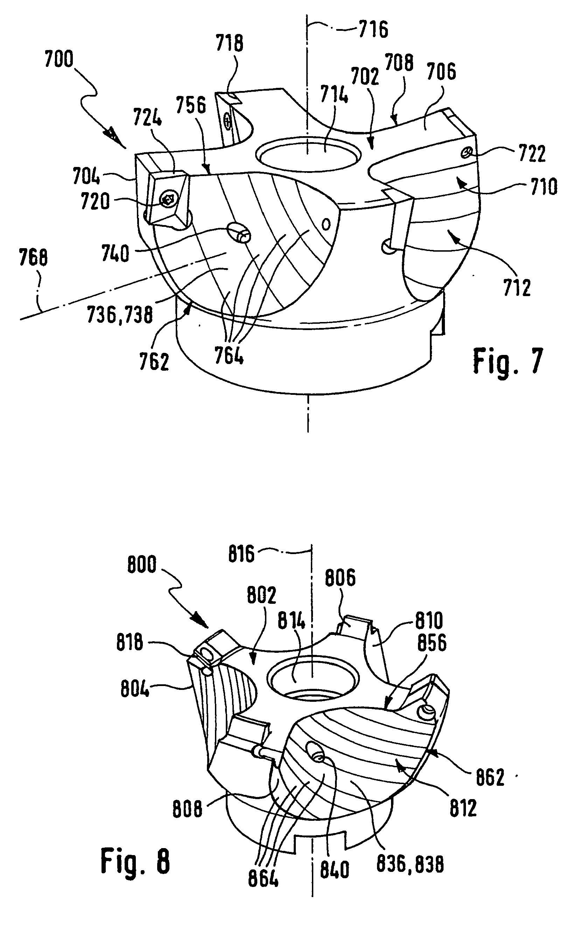

In Figur 7 ist ein weiteres Beispiel eines erfindungsgemäßen Fräswerkzeugs 700 dargestellt, dessen insgesamt vier Spankammern 712 jeweils durch einen in sich mehrfach gekrümmten Oberflächenabschnitt 736 gebildet sind. Der Oberflächenabschnitt 736 nimmt die gesamte Oberfläche einer Spankammer 712 ein und erstreckt sich, eine Schneide 724 einbettend, von der Vorderseite 708 einer Materialerhebung 706 bis hin zur Rückseite 710 einer benachbarten Materialerhebung 706.

Der Oberflächenabschnitt 736 wird hergestellt, indem ein nicht dargestelltes Bearbeitungswerkzeug um eine Rotationsachse 768 rotiert und eine der Stufen 764 des Oberflächenabschnitts 736 erzeugt. Für die Bearbeitung der weiteren Stufen kann die Bearbeitungsachse 768 jeweils in ihrer Neigung und Lage gegenüber der Rotationsachse 716 angepasst werden. Dabei steht sie schräg oder windschief schräg zur Rotationsachse 716.

Das in Figur 8 dargestellte Fräswerkzeug 800 zeigt beispielhaft ein Fräswerkzeug mit vier Spankammern 812, die einen in sich mehrfach gekrümmten Oberflächenabschnitt 836 aufweisen, der eine gegenüber dem in Figur 7 dargestellten Fräswerkzeug 700 feinere Stufung 864 aufweist. Hierdurch kann eine besonders homogene Gestalt der Spankammern 812 erzeugt werden. Hierfür ist jedoch im Vergleich zu einer gemäß Figur 7 ausgebildeten Spankammer 712 eine höhere Anzahl von Bearbeitungsvorgängen erforderlich.

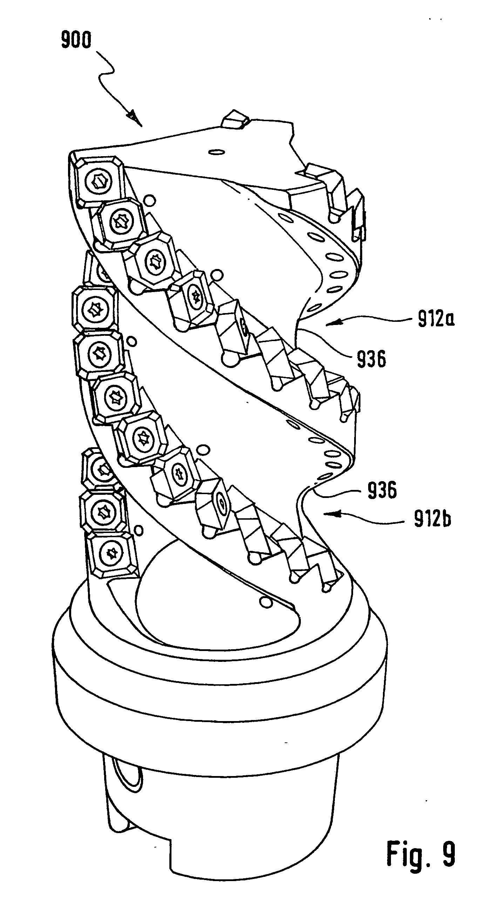

Das in Figur 9 dargestellte Fräswerkzeug 900 weist wendelförmig angeordnete Spankammern 912a und 912b auf. Die Spankammern 912a und 912b sind im Profil rinnenförmig und jeweils aus einem mehrfach gekrümmten Oberflächenabschnitt 936 gebildet. Über der Fläche der Spankammern 912a und 912b sind bei der Erfindung in der Figur 9 nicht dargestellte sich quer zu einer Grundlinie des Rinnengrunds erstreckende Stufen vorgesehen, welche im wesentlichen parallel zueinander angeordnet und in sich gekrümmt sind.

## Patentansprüche

1. Fräswerkzeug (300, 400, 500, 600, 700, 800, 900, 1000) mit einem Grundkörper, auf dem an der Stirnseite (302, 402, 502, 602, 702, 802) und/oder Umfangsseite (304, 404, 504, 604, 704, 804) mindestens eine Materialerhebung (306, 406, 506, 606, 706, 806) vorgesehen ist, auf und/oder an deren Vorderseite (308, 408, 508, 608, 708, 808) mindestens eine Schneide (324, 624, 724) vorgesehen ist, wobei benachbart zu der Schneide (324, 624, 724) oder zwischen den Schneiden (324, 624, 724) mindestens eine Spankammer (312, 412, 512, 612, 712, 812, 912a, 912b, 1012) zum Abtransport von während eines Fräsvorgangs erzeugten Spänen vorgesehen ist, die mindestens einen Oberflächenabschnitt (336, 436, 536, 636, 736, 836, 936, 1036) aufweist, der sich von einer oder benachbart zu einer Schneide (324, 624, 724) bis hin zur Rückseite (310, 410, 510, 610, 710, 810) einer zu der Schneide (324, 624, 724) benachbarten Materialerhebung (306, 406, 506, 606, 706, 806) erstreckt, **dadurch gekennzeichnet, dass** der Oberflächenabschnitt (336, 436, 536, 636, 736, 836, 936, 1036) eine stete, in sich mehrfach gekrümmte Ebene (338, 438, 538, 638, 738, 838) bildet, wobei über der Fläche des Oberflächenabschnitts (336, 436, 536, 636, 736, 836, 936, 1036) Stufen (364, 464, 564, 664, 764, 864) vorgesehen sind, welche im wesentlichen parallel zueinander angeordnet und in sich gekrümmt sind.

2. Fräswerkzeug (300, 400, 500, 600, 700, 800, 900, 1000) mit mindestens einer an der Stirnseite (302, 402, 502, 602, 702, 802) und/oder Umfangsseite (304, 404, 504, 604, 704, 804) des Fräswerkzeugs (300, 400, 500, 600, 700, 800, 900, 1000) angeordneten Schneide (324, 624, 724), wobei benachbart zu der Schneide (324, 624, 724) oder zwischen den Schneiden (324, 624, 724) mindestens eine Spankammer (312, 412, 512, 612, 712, 812, 912a, 912b, 1012) zum Abtransport von während eines Fräsvorgangs erzeugten Spänen vorgesehen ist, **dadurch gekenntzeichnet,** dass die Spankammer (312, 412, 512, 612, 712, 812, 912a, 912b, 1012) im Wesentlichen durch einen insgesamt rinnenförmigen Oberflächenschnitt (542) gebildet ist, wobei der Rinnengrund (544) oder Tangenten (548) zum Rinnengrund (544) schräg oder windschief schräg zur Rotationsachse (316, 416, 516, 616, 716, 816) des Fräswerkzeugs (300, 400, 500, 600, 700, 800, 900, 1000) verlaufen, wobei über der Fläche dieses Rinnengrunds (544) sich quer zu einer Grundlinie (546) des Rinnengrunds (544) erstreckende Stufen (364, 464, 564, 664, 764, 864) vorgesehen sind, welche im wesentlichen parallel zueinander angeordnet und in sich gekrümmt sind.

3. Fräswerkzeug (300, 400, 500, 600, 700, 800, 900, 1000) nach Anspruch 2, **dadurch gekennzeichnet, dass** der Rinnengrund (544) entlang einer geraden oder stetig gekrümmten Grundlinie (546) verläuft.

4. Fräswerkzeug (300, 400, 500, 600, 700, 800, 900, 1000) nach Anspruch 2 oder 3, **dadurch gekennzeichnet, dass** der Rinnengrund (544) entlang einer spiralförmigen Grundlinie (546) verläuft.

5. Fräswerkzeug (300, 400, 500, 600, 700, 800, 900, 1000) nach Anspruch 4, **dadurch gekennzeichnet, dass** entlang der Grundlinie (546) der radiale Abstand (550) zur Rotationsachse (316, 416, 516, 616, 716, 816) des Fräswerkzeugs (300, 400, 500, 600, 700, 800, 900, 1000) variiert.

6. Fräswerkzeug (300, 400, 500, 600, 700, 800, 900, 1000) nach einem der vorhergehenden Ansprüche, **dadurch gekennzeichnet, dass** der Oberflächenabschnitt (336, 436, 536, 636, 736, 836, 936, 1036) mindestens 40% der Oberfläche der Spankammer (312, 412, 512, 612, 712, 812, 912a, 912b, 1012) einnimmt.

7. Fräswerkzeug (300, 400, 500, 600, 700, 800, 900, 1000) nach einem der vorhergehenden Ansprüche, **dadurch gekennzeichnet, dass** der Oberflächenabschnitt (336, 436, 536, 636, 736, 836, 936, 1036) zumindest abschnittsweise durch eine gekrümmte Randlinie (354, 554, 456, 656, 756, 856, 460, 362, 462, 562, 662, 762, 862) begrenzt ist.

8. Fräswerkzeug (300, 400, 500, 600, 700, 800, 900, 1000) nach Anspruch 7, **dadurch gekennzeichnet, dass** die Randlinie (456, 656, 756, 856, 362, 462, 562, 662, 762, 862) mehrfach gekrümmt ist.

9. Fräswerkzeug (300, 400, 500, 600, 700, 800, 900, 1000) nach Anspruch 7 oder 8, **dadurch gekennzeichnet, dass** die Randlinie (354, 554, 456, 656, 756, 856, 460, 362, 462, 562, 662, 762, 862) mindestens entlang 40% ihres Verlaufs gekrümmt ist.

10. Fräswerkzeug (300, 400, 500, 600, 700, 800, 900, 1000) nach einem der vorhergehenden Ansprüche, **dadurch gekennzeichnet, dass** die Stufen (364, 464, 564, 664, 764, 864) senkrecht und/oder schräg zur Rotationsachse (316, 416, 516, 616, 716, 816) des Fräswerkzeugs (300, 400, 500, 600, 700, 800, 900, 1000) angeordnet sind.

11. Fräswerkzeug (300, 400, 500, 600, 700, 800, 900, 1000) nach einem der vorhergehenden Ansprüche, **dadurch gekennzeichnet, dass** verschiedene Stufen (364, 464, 564, 664, 764, 864) mit verschiedenen Bearbeitungswerkzeugen (366) und/oder mit unterschiedlich orientierten Rotationsachsen (368, 768) des Bearbeitungswerkzeugs (366) und/oder der Bearbeitungswerkzeuge (366) hergestellt sind.

## Claims

1. A milling tool (300, 400, 500, 600, 700, 800, 900, 1000), having a base body on whose front side (302, 402, 502, 602, 702, 802) and/or circumferential side (304, 404, 504, 604, 704, 804) at least one raised material section (306, 406, 506, 606, 706, 806) is provided, on and/or at whose front side (308, 408, 508, 608, 708, 808) at least one cutting edge (324, 624, 724) is provided, wherein adjacent to the cutting edge (324, 624, 724) or between the cutting edges (324, 624, 724) at least one chip chamber (312, 412, 512, 612, 712, 812, 912a, 912b, 1012) is provided for removing the chips generated during a milling process and which has at least one surface section (336, 436, 536, 636, 736, 836, 936, 1036), which extends from, or adjacent to a cutting edge (324, 624, 724) as far as the rear (310, 410, 510, 610, 710, 810) of a material section (306, 406, 506, 606, 706, 806) which is located adjacent to the cutting edge (324, 624, 724), **characterized in that** the surface section (336, 436, 536, 636, 736, 836, 936, 1036) forms a continuous level (338, 438, 538, 638, 738, 838), which is repeatedly curved in itself, wherein steps (364, 464, 564, 664, 764, 864) are provided over the surface of the surface section (336, 436, 536, 636, 736, 836, 936, 1036), which are arranged substantially parallel to each other and curved in themselves.

2. A milling tool (300, 400, 500, 600, 700, 800, 900, 1000), having at least one cutting edge (324, 624, 724) arranged at the front side (302, 402, 502, 602, 702, 802) and/or circumferential side (304, 404, 504, 604, 704, 804) of the milling tool (300, 400, 500, 600, 700, 800, 900, 1000), wherein adjacent to the cutting edge (324, 624, 724) or between the cutting edges (324, 624, 724) at least one chip chamber (312, 412, 512, 612, 712, 812, 912a, 912b, 1012) is provided for removing the chips generated during a milling process, **characterized in that** the chip chamber (312, 412, 512, 612, 712, 812, 912a, 912b, 1012) is substantially formed by a surface section (542) which, as a whole, is channel-shaped, wherein the channel bottom (544), or tangential lines (548) in respect to the channel bottom (544) extend obliquely or are skewed obliquely in relation to the axis of rotation (316, 416, 516, 616, 716, 816) of the milling tool (300, 400, 500, 600, 700, 800, 900, 1000), wherein steps (364, 464, 564, 664, 764, 864) are provided, which extend transversely to a base line (546) of the channel bottom (544) over the surface of this channel bottom (544) and are arranged substantially parallel to each other and curved in themselves.

3. The milling tool (300, 400, 500, 600, 700, 800, 900, 1000) in accordance with claim 2, **characterized in that** the channel bottom (544) extends along a straight or continuously curved base line (546).

4. The milling tool (300, 400, 500, 600, 700, 800, 900, 1000) in accordance with claim 2 or 3, **characterized in that** the channel bottom (544) extends along a spiral-shaped base line (546).

5. The milling tool (300, 400, 500, 600, 700, 800, 900, 1000) in accordance with claim 4, **characterized in that** along the base line (546) the radial distance (550) of the milling tool (300, 400, 500, 600, 700, 800, 900, 1000) steadily changes in respect to the axis of rotation (316, 416, 516, 616, 716, 816).

6. The milling tool (300, 400, 500, 600, 700, 800, 900, 1000) in accordance with one of the preceding claims, **characterized in that** the surface section (336, 436, 536, 636, 736, 836, 936, 1036) occupies at least 40% of the surface of the chip chamber (312, 412, 512, 612, 712, 812, 912a, 912b, 1012).

7. The milling tool (300, 400, 500, 600, 700, 800, 900, 1000) in accordance with one of the preceding claims, **characterized in that** the surface section (336, 436, 536, 636, 736, 836, 936, 1036) is delimited, at least along sections, by a curved edge line (354, 554, 456, 656, 756, 856, 460, 362, 462, 562, 662, 762, 862).

8. The milling tool (300, 400, 500, 600, 700, 800, 900, 1000) in accordance with claim 7, **characterized in that** the edge line (456, 656, 756, 856, 362, 462, 562, 662, 762, 862) is curved several times.

9. The milling tool (300, 400, 500, 600, 700, 800, 900, 1000) in accordance with claim 7 or 8, **characterized in that** the edge line (354, 554, 456, 656, 756, 856, 460, 362, 462, 562, 662, 762, 862) is curved along at least 40% of its course.

10. The milling tool (300, 400, 500, 600, 700, 800, 900, 1000) in accordance with one of the preceding claims, **characterized in that** the steps (364, 464, 564, 664, 764, 864) are arranged perpendicularly and/or obliquely in respect to the axis of rotation (316, 416, 516, 616, 716, 816) of the milling tool (300, 400, 500, 600, 700, 800, 900, 1000).

11. The milling tool (300, 400, 500, 600, 700, 800, 900, 1000) in accordance with one of the preceding claims, **characterized in that** different steps (364, 464, 564, 664, 764, 864) are produced for having different processing tools (366) and/or have differently oriented axes of rotation (368, 768) of the processing tool (366) and/or processing tools (366).

## Revendications

1. Outil à fraiser (300, 400, 500, 600, 700, 800, 900, 1000), comprenant un corps de base sur lequel, du côté frontal (302, 402, 502, 602, 702, 802) et/ou du côté périphérique (304, 404, 504, 604, 704, 804), au moins un relèvement de matériau (306, 406, 506, 606, 706, 806) est prévu, sur le et/ou au niveau du côté avant (308, 408, 508, 608, 708, 808) duquel, au moins une lame (324, 624, 724) est prévue, dans lequel, de façon adjacente à la lame (324, 624, 724) ou entre les lames (324, 624, 724), au moins un logement de copeaux (312, 412, 512, 612, 712, 812, 912a, 912b, 1012) pour l'évacuation de copeaux produits pendant une opération de fraisage est prévu et qui présente au moins une partie de surface (336, 436, 536, 636, 736, 836, 936, 1036) qui s'étend à partir d'une lame (323, 624, 724) ou depuis le voisinage de celle-ci jusqu'au côté arrière (310, 410, 510, 610, 710, 810) d'un relèvement de matériau (306, 406, 506, 606, 706, 806) adjacent à la lame (324, 624, 724), **caractérisé en ce que** la partie de surface (336, 436, 536, 636, 736, 836, 936, 1036) forme un plan continu (338, 438, 538, 638, 738, 838) courbé plusieurs fois en soi, dans lequel à travers la superficie de la partie de surface (336, 436, 536, 636, 736, 836, 936, 1036), des gradins (364, 464, 564, 664, 764, 864) sont prévus qui sont disposés substantiellement en parallèle les uns aux autres et sont courbés en soi.

2. Outil à fraiser (300, 400, 500, 600, 700, 800, 900, 1000), comprenant au moins une lame (324, 624, 724) disposée sur le côté frontal (302, 402, 502, 602, 702, 802) et/ou le côté périphérique (304, 404, 504, 604, 704, 804) de l'outil à fraiser (300, 400, 500, 600, 700, 800, 900, 1000), dans lequel de façon adjacente à la lame (324, 624, 724) ou entre les lames (324, 624, 724), au moins un logement de copeaux (312, 412, 512, 612, 712, 812, 912a, 912b, 1012) est prévu pour l'évacuation de copeaux produits pendant une opération de fraisage, **caractérisé en ce que** le logement de copeaux (312, 412, 512, 612, 712, 812, 912a, 912b, 1012) est formé substantiellement par une partie de surface (542) globalement en forme de rainure, dans lequel le fond de rainure (544) ou des tangentes (548) au fond de rainure (544) s'étendent de façon oblique ou de façon gauchie oblique à l'axe de rotation (316, 416, 516, 616, 716, 816) de l'outil de fraisage (300, 400, 500, 600, 700, 800, 900, 1000), dans lequel à travers la superficie de ce fond de rainure (544), des gradins (364, 464, 564, 664, 764, 864) s'étendant transversalement à une ligne de base (546) du fond de rainure (544) sont prévus et qui sont disposés substantiellement en parallèle les uns aux autres et sont courbés en soi.

3. Outil à fraiser (300, 400, 500, 600, 700, 800, 900, 1000) selon la revendication 2, **caractérisé en ce que** le fond de rainure (544) s'étend le long d'une ligne de base (546) droite ou courbée en continu.

4. Outil à fraiser (300, 400, 500, 600, 700, 800, 900, 1000) selon la revendication 2 ou 3, **caractérisé en ce que** le fond de rainure (544) s'étend le long d'une ligne de base hélicoïdale (546).

5. Outil à fraiser (300, 400, 500, 600, 700, 800, 900, 1000) selon la revendication 4, **caractérisé en ce que** le long de la ligne de base (546), l'espacement radial (550) par rapport à l'axe de rotation (316, 416, 516, 616, 716, 816) de l'outil à fraiser (300, 400, 500, 600, 700, 800, 900, 1000) varie.

6. Outil à fraiser (300, 400, 500, 600, 700, 800, 900, 1000) selon l'une quelconque des revendications précédentes, **caractérisé en ce que** la partie de surface (336, 436, 536, 636, 736, 836, 936, 1036) occupe au moins 40 % de la surface du logement de copeaux (312, 412, 512, 612, 712, 812, 912a, 912b, 1012).

7. Outil à fraiser (300, 400, 500, 600, 700, 800, 900, 1000) selon l'une quelconque des revendications précédentes, **caractérisé en ce que** la partie de surface (336, 436, 536, 636, 736, 836, 936, 1036) est limitée au moins localement par une ligne de bord courbée (354, 554, 456, 656, 756, 858, 460, 362, 462, 562, 662, 762, 862).

8. Outil à fraiser (300, 400, 500, 600, 700, 800, 900, 1000) selon la revendication 7, **caractérisé en ce que** la ligne de bord (456, 656, 756, 856, 362, 462, 562, 662, 762, 862) est courbée plusieurs fois.

9. Outil à fraiser (300, 400, 500, 600, 700, 800, 900, 1000) selon la revendication 7 ou 8, **caractérisé en ce que** la ligne de bord (354, 554, 456, 656, 756, 856, 460, 362, 462, 562, 662, 762, 862) est courbée au moins le long de 40 % de son trajet.

10. Outil à fraiser (300, 400, 500, 600, 700, 800, 900, 1000) selon l'une quelconque des revendications précédentes, **caractérisé en ce que** les gradins (364, 464, 564, 664, 764, 864) sont disposés de façon verticale et/ou oblique à l'axe de rotation (316, 416, 516, 616, 716, 816) de l'outil à fraiser (300, 400, 500, 600, 700, 800, 900, 1000).

11. Outil à fraiser (300, 400, 500, 600, 700, 800, 900, 1000) selon l'une quelconque des revendications précédentes, **caractérisé en ce que** différents gradins (364, 464, 564, 664, 764, 864) sont fabriqués avec différents outils d'usinage (366) et/ou avec des axes de rotation (368, 768) orientés différemment de l'outil d'usinage (366) et/ou des outils d'usinage (366).
